Europäisches Patentamt

**(19)** European Patent Office

Office européen des brevets

**(11)** Publication number : **0 476 787 B1**

## **(12)** EUROPEAN PATENT SPECIFICATION

**(45)** Date of publication of patent specification :
21.06.95 Bulletin 95/25

**(51)** Int. Cl.⁶ : **G01S 15/87,** B60V 1/00

**(21)** Application number : **91202461.9**

**(22)** Date of filing : **20.09.91**

**(54) Ultrasonic height-measuring system for use in a vessel.**

**(30)** Priority : **21.09.90 NL 9002075**

**(43)** Date of publication of application :
25.03.92 Bulletin 92/13

**(45)** Publication of the grant of the patent :
21.06.95 Bulletin 95/25

**(84)** Designated Contracting States :
**BE DE DK ES FR GB IT NL SE**

**(56)** References cited :
EP-A- 0 261 731
DE-A- 1 812 072
DE-A- 2 447 993
GB-A- 2 123 952
NL-A- 7 611 473
US-A- 4 722 547

**(73)** Proprietor : **EUROSENSE HOVERSOUNDING N.V.**
**Oude Stationstraat 144**
**B-8700 Tielt (BE)**

**(72)** Inventor : **Claeys, Frans**
**New Yorklaan z/n**
**B 8380 Zeebrugge (BE)**

**(74)** Representative : **de Bruijn, Leendert C. et al**
**Nederlandsch Octrooibureau**
**Scheveningseweg 82**
**P.O. Box 29720**
**NL-2502 LS Den Haag (NL)**

EP 0 476 787 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a system for measuring the instantaneous height of a vessel, above the water surface using a number of height-measuring devices and an electronic control and processing unit.

In hydrography, it is known in the case of hovercraft measuring platforms which are employed for surveying shipping lanes, offshore regions and the like to use a height-measuring system. The dynamic nature of these fast vessels makes it necessary to use a number of measuring devices or sensors associated with such a height-measuring system. These measuring devices supply information signals to the control and processing unit of the height-measuring system installed on board the vessel. Fed to this unit are also signals originating from depth transducers which reproduce the measured so-called rough depth of the sea bed. These rough depth signals are processed by the unit with the aid of information signals originating from the measuring sensors and other corrections to produce a corrected depth measurement.

The said measuring sensors are usually designed in the form of a so-called "ranging pole". This rod-type ranging pole mounted at the front of a steel sword projecting into the water is provided with a number of contact points which are arranged vertically at regular distances from one another. The electronic unit connected to said contact points detects which contact points are in fact in the water and which contact points are above the water surface, or which are in a cloud of water mist. Usually there are two hydraulically movable arms, on each of which a ranging pole is mounted, mounted on either side of the vessel. At the speed at which the vessel travels during depth sounding, appreciable forces are produced on said ranging pole sensor. During an unexpected collision with, for example, an obstacle floating in the water, it may happen that one or more of the contact points bend over or even break off. The replacement of these demountable contact points is a laborious and time-consuming process. The fact that the ranging pole sensors are in contact with the water results in a certain amount of maintenance work.

The object of the invention is to eliminate these disadvantages and to provide a height measuring system whose operating reliability is appreciable and whose maintenance time is minimised.

This is achieved in a system of the type mentioned in the preamble in such a way that at least one ultrasonic transmit-receive transducer and two other height-related transducers are used as height-measuring devices, which at least three transducers are mounted in a fixed distance relationship with respect to a reference plane extending perpendicularly to the axis of the vessel mast, ultrasonic waves being emitted in the direction of the water surface by the at least one ultrasonic transducer and being received by it after reflection thereat, additional height-related information being determined by the other two transducers, and in such a way that the analog output signals of the transducers are fed to the control and processing unit, in which said output signals are processed to obtain the height of the said water surface.

This design of the measuring system, which makes a contactless measuring method with the water possible, appreciably increases the operating reliability.

The principle of ultrasonic distance measurement is known per se and is based on a time measurement in which the time of emission of a sound pulse and the instant at which its echo is received are measured. The measured time is proportional to double the distance to the surface at which the sound is reflected. The proportionality factor is the propagation velocity of the sound in air at atmospheric pressure as a function of a number of parameters, including the temperature. For this purpose, the temperature is usually measured continuously in the vicinity of an ultrasonic transducer.

DE-A-1812072 discloses a system for adjusting the position of a hydrofoil vessel with the aid of an echo-sounding device. For this purpose, an echo-sounding transducer which determines the depth of the sea bed is mounted on a first arm projecting into the water below the ship. Some further transducers which determine the distance upwards to the water surface from their position in the water are also mounted on the first and two further arms projecting into the water. The signals from these transducers are fed to some memory capacitors in a control unit. The voltage stored in each respective capacitor is proportional to the transit time of the ultrasonic signal in the water. The voltages originating from a plurality of capacitors are fed via an amplifier stage as a control signal to the control unit for the purpose of adjusting the hydrofoils. This measuring system is therefore aimed at controlling the position of the vessel.

The present invention will now be explained in greater detail on the basis of an exemplary embodiment with reference to the figures, wherein:

Figure 1 shows a diagrammatic plan view of a hovercraft measuring platform;

Figure 2 shows a perspective view of such a measuring platform provided with measuring transducers;

Figure 3a shows the reference axis system associated with the system according to the invention;

Figure 3b shows a side view in general of a measuring platform;

Figure 4 shows a block diagram of the electronic control and processing unit of the system according to the invention; and

Figure 5 shows a plot of a number of signals and determined depth values measured according to the invention as a function of time.

In the ultrasonic height-measuring system according to the invention, a number of at least one ultrasonic transducer and two other height-related transducers are mounted around a vessel, for example a hovercraft measuring platform. Although reference is made to a measuring platform in the following example, it will be clear to the person skilled in the art that the height-measuring system according to the invention can be mounted on any other vessel suitable for the purpose. The said transducers and an electronic control and processing unit jointly have to determine the height of the water surface. These transducers are mounted in a fixed distance (height) relationship with respect to and above a reference plane extending perpendicular to the axis of the ship's mast 12 (see Figure 3b). This plane extends in general virtually parallel to and below the mean water surface. The two other transducers may be two ultrasonic transmit-receive transducers or two converters from a vertical gyroscope. It is obvious that a plurality of transducers equally distributed around the vessel can be used in connection with a greater reliability. Thus, in the exemplary embodiment of this application five identical transducers are mounted at various positions.

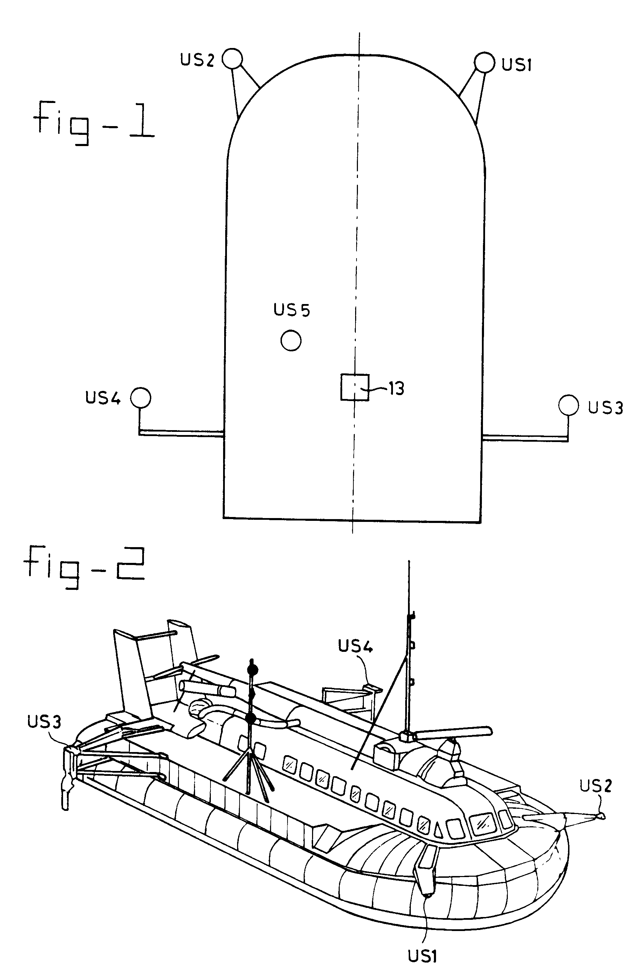

Referring to Figure 3b, the positioning of a number of parts on the measuring platform will now be explained in greater detail. As has already been indicated in the plan view of Figure 1 and the perspective view of Figure 2, two of these transducers US1, US2 are mounted at the front of the measuring platform on special hydraulically raisable support arms and two other transducers US3, US4 are mounted at the rear of the measuring platform on hydraulically raisable arms. These arms may also have the additional function of introducing depth transducers into the water, i.e. additional transducers for measuring under water, the depth of the sea bed. Said depth transducers may also be optionally introduced into the water by means of a completely separate arm. In this case, the transducers US3 and US4 are also mounted on special hydraulically raisable support arms in the way in which this has been done with the front transducers US1 and US2. A fifth transducer US5 is mounted beneath the measuring platform in a recess in the bottom. It is also possible to mount one more transducer, the sixth, below the measuring platform. The use of this number (namely five or six) of transducers, more than is mathematically required (namely three), provides redundancy and reliability. The failure of one of these transducers does not cause any interruption of the measuring journey which is in progress and the replacement or repair can be done later. This increases the overall MTBF (mean time between failures) of the measuring platform. Also mounted on the measuring platform is a vertical gyroscope for determining the roll and pitch of the measuring platform during the measurements.

As stated earlier, the dynamic nature of the measuring platforms used for hydrography makes it necessary to determine the accurate height with respect to the water surface 10 with the aid of a number of transducers. For this purpose, the slow variations in the height between a specified fixed point of the measuring platform and the mean water surface are measured. In doing this, it is assumed that the mean water surface can be approximated as a flat plane in the vicinity of the measuring platform and within the time span of the measurement.

As is indicated diagrammatically in Figures 3a and 3b, a theoretical coordinate system whose origin is situated beneath the swell or heave compensator 13 is defined on the measuring platform. In this exemplary embodiment, said origin lies in the plane which extends through the bottom of the measuring probe 11 mounted beneath the platform. Mounted in said probe are one or two depth or so-called echo-sounding transducers for measuring the depth of the sea bed. The Y-axis runs parallel to the longitudinal direction of the measuring platform and its positive direction is directed towards the front, and the X-axis is transverse to said longitudinal direction and its positive direction is directed towards starboard. The Z-axis which is perpendicular to the reference plane formed by the X- and Y-axes runs parallel to the axis of the vessel mast 12, through the heave compensator 13, and is directed upwards. The transducers are all involved in a fixed distance (height) relationship to the XY reference plane and are mounted on special hydraulically raisable arms around the measuring platform. Each transducer has a fixed vertical distance from the reference plane.

From the XY reference plane permanently coupled to the measuring platform, the mean water surface can be observed, as it were, from underneath. This mean water surface can be described at any instant during the measurement with respect to the reference system by:

$$z = R.x + P.y + H. \quad [1]$$

Here x and y are the coordinates of a point in the said XY reference plane and the variable z is the height of the said water surface at the point determined by the x, y coordinate system. In this case, the parameters R, P and H are unknown variables to be determined. Once these parameters are known, the plane can be evaluated at any point whatsoever and we know the required height at any point whatsoever.

The analog output signals originating from the number of transducers is first filtered for the purpose of "anti-aliasing", then digitised. All the digitised signals are converted with the aid of a linear transformation into signals which indicate a measured water height above the said XY reference plane or, in the case of roll and pitch, calibrated angular rotations in the XYZ axial system. For this purpose, the digitised value (expressed in [bit]) is multiplied by a suitable conversion factor (expressed in [m/bit]) and a suitable offset value (expressed in [m]) is added. For each transducer, the conversion factor depends on the gain set on the respective measuring converter and the offset reproduces the vertical height of said transducer with respect to the XY reference plane. After the linear transformation, the signals indicate physical quantities. These values are then fed through a finite impulse response filter. As a result of making use of the digital filter, only that part of the low-frequency spectrum is retained which is important for the height measurement. The low-frequency filtered signals are resampled and then interpolated back in order to save computing time. The FIR filter has the advantage of having a linear phase and therefore a constant group delay for all frequencies. Finally, these filtered signals can be further processed together in the algorithm.

The analog roll and pitch output signals of the gyroscope are treated and processed in the same way.

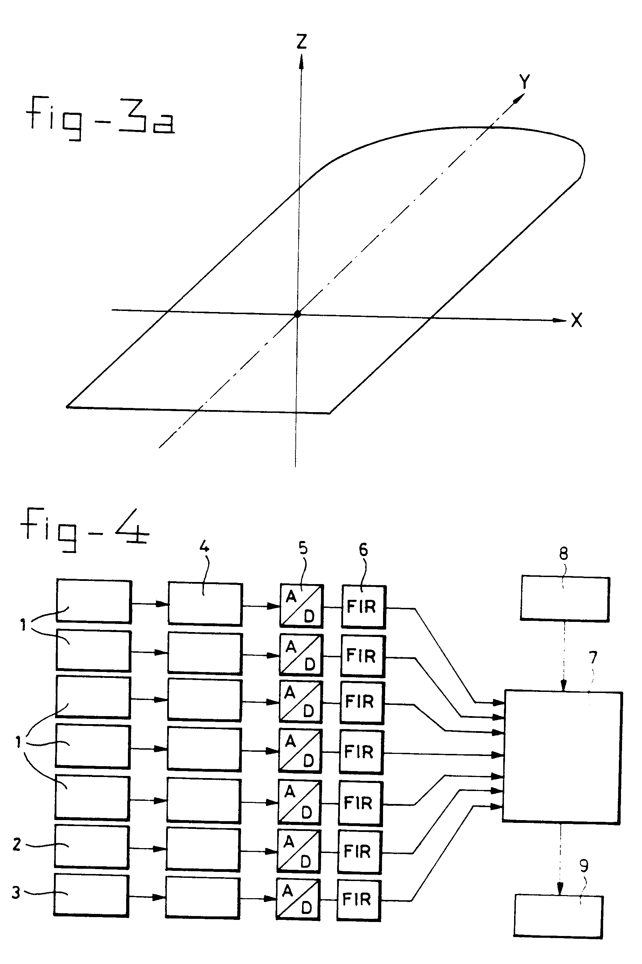

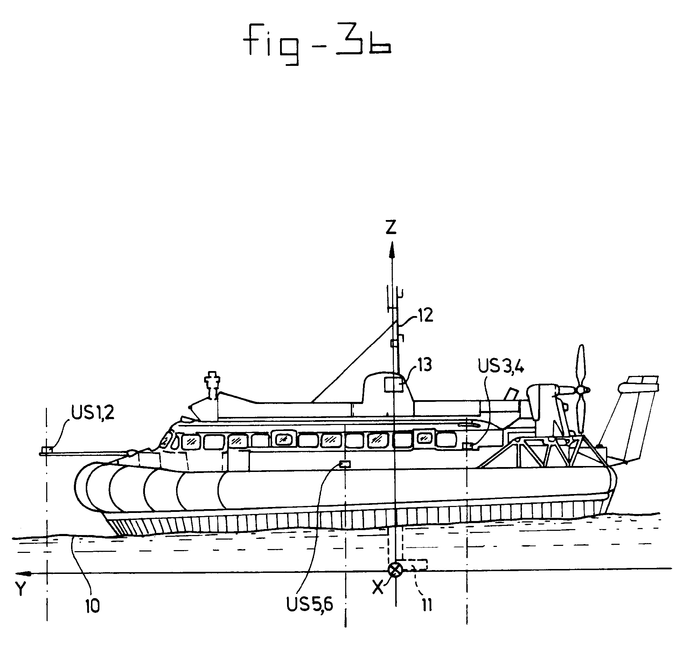

Figure 4 shows the general plan of the various signal channels. In it, 1 indicates in all cases an ultrasonic transducer, 2 and 3, respectively, indicate the roll and pitch converters from the vertical gyroscope, 4 indicates in all cases an anti-aliasing filter, 5 indicates in all cases an A/D converter, 6 indicates in all cases an FIR filter, 7 indicates the electronic control and processing unit, and 8 and 9, respectively, indicate input and output registers with which the xy position of the measuring platform is entered and the calculated height z is emitted as output or stored.

The mathematical description of these measured data can be translated into the form of a system of linear equations, for example with three equations based on three transducers in the simplest case or with seven equations based on seven transducers in the following example.

$$z_1 = R.x_1 + P.y_1 + H \quad [2]$$
$$z_2 = R.x_2 + P.y_2 + H \quad [3]$$
$$z_3 = R.x_3 + P.y_3 + H \quad [4]$$
$$z_4 = R.x_4 + P.y_4 + H \quad [5]$$
$$z_5 = R.x_5 + P.y_5 + H \quad [6]$$
$$D.\tan(roll) = R.D \quad [7]$$
$$D.\tan(pitch) = P.D \quad [8]$$

The equations [2] to [6] inclusive relate to measuring values from the ultrasonic transducers. The equations [7] and [8] originate from the angular measurements with the vertical gyroscope.

The values $z_1$, $z_2$, $z_3$, $z_4$ and $z_5$ are the low pass-filtered height measurement values from the ultrasonic transducers. The sets of coordinates $x_1$, $y_1$; $x_2$, $y_2$; $x_3$, $y_3$; $x_4$, $y_4$ and $x_5$, $y_5$ give the positions of the five named transducers in the xy plane. If an ultrasonic transducer were to be moved, its position would have to be remeasured relatively with respect to the axial system which is permanently associated with the hovercraft.

The parameters R, P and H are, as already stated above, the parameters which describe the mean water surface (see equation [1]). The distance D is an imaginary distance of, for example, 10 metres which is used as multiplication factor for the two equations which relate to rotations around the Y-axis and the X-axis (equations [7] and [8]). This is necessary because all the equations then relate to an identical physical event: height measurement.

The three unknowns R, P and H can be determined on the basis of the seven equations by means of a least squares approximation or a weighted least squares approximation (WLSQ). According to linear algebra, a system of N equations containing N unknowns can be solved exactly if the transformation matrix of the system is not singular. In the overdetermined case (more equations than unknowns), such as in this specific problem, a "best fit" solution can be found. The best possible solution acquires in this connection the significance of a solution in which the sum of the squares of the difference between the measurements and the calculated heights at the positions where a transducer is mounted is a minimum.

In order to arrive at the solution, we define the following matrices:

The matrix A, the "transformation matrix" of dimension 7 × 3:

$$A = \begin{bmatrix} x_1 & y_1 & 1 \\ x_2 & y_2 & 1 \\ x_3 & y_3 & 1 \\ x_4 & y_4 & 1 \\ x^5 & y_5 & 1 \\ D & 0 & 1 \\ 0 & D & 1 \end{bmatrix} \quad [9]$$

The matrix B, the "observation matrix" of dimension 7 × 1:

4

$$B = \begin{bmatrix} z_1 \\ z_2 \\ z_3 \\ z_4 \\ z_5 \\ D.\tan(roll) \\ D.\tan(pitch) \end{bmatrix} \qquad [10]$$

The matrix X, the "unknown matrix" of dimension $3 \times 1$:

$$X = \begin{bmatrix} R \\ P \\ H \end{bmatrix} \qquad [11]$$

We can rewrite the system of equations [2] to [7] inclusive using matrix notation:

$$\begin{bmatrix} x_1 & y_1 & 1 \\ x_2 & y_2 & 1 \\ x_3 & y_3 & 1 \\ x_4 & y_4 & 1 \\ x_5 & y_5 & 1 \\ D & 0 & 1 \\ 0 & D & 1 \end{bmatrix} \cdot \begin{bmatrix} R \\ P \\ H \end{bmatrix} = \begin{bmatrix} z_1 \\ z_2 \\ z_3 \\ z_4 \\ z_5 \\ D.\tan(roll) \\ D.\tan(pitch) \end{bmatrix} \qquad [12]$$

Or in abbreviated form:

$$A.X = B \quad [13]$$

This system does not in general have an exact solution. An estimate $X_e$ can be found for the matrix X by performing the following algebraic operation:

$$X_e = (A^t.W.A)^{-1}.A^t.W.B \quad [14]$$

There the matrix W is the "weighting matrix" which has the following appearance:

$$W = \begin{bmatrix} w_1 & 0 & 0 & 0 & 0 & 0 & 0 \\ 0 & w_2 & 0 & 0 & 0 & 0 & 0 \\ 0 & 0 & w_3 & 0 & 0 & 0 & 0 \\ 0 & 0 & 0 & w_4 & 0 & 0 & 0 \\ 0 & 0 & 0 & 0 & w_5 & 0 & 0 \\ 0 & 0 & 0 & 0 & 0 & w_6 & 0 \\ 0 & 0 & 0 & 0 & 0 & 0 & w_7 \end{bmatrix} \qquad [15]$$

$A^t$ is the transposed matrix of A and the matrix $(A^t.W.A)^{-1}$ is the inverse matrix of $(A^t.W.A)$.

The system [13] can be rewritten as follows:

$$A.X_e = B + R \quad [16]$$

The vector R contains the remainders $r_i$:

$$R = \begin{bmatrix} r_1 \\ r_2 \\ r_3 \\ r_4 \\ r_5 \\ r_6 \\ r_7 \end{bmatrix} \qquad [17]$$

The matrix equation [16] can therefore be written differently:

$$R = A.X_e - B \quad [18]$$

In other words, the remainders $r_i$ are the difference between the estimated height values $A.X_e$ and the measured height values B.

By carrying out the matrix operations described in equation [14] the weighted least squares approximation $X_e$ is therefore obtained.

The matrix X, the "unknown matrix" of dimension $3 \times 1$:

$$X_e = \begin{bmatrix} R_e \\ P_e \\ H_e \end{bmatrix} \quad [19]$$

The matrix $X_e$ approximates the unknown matrix X better as the remainders $r_i$ become smaller. The remainders have their origin in the existence of observation errors or measurement errors and imperfections in the chosen mathematical model.

These data can then be used to determine the height at the position of the measurement probe concerned, for which the height correction should be made. In order to know the height $z_j$ at a point $P_j$ having coordinates $(x_j, y_j)$, the following algebraic equation can be solved:

$$z_j = R_e.x_j + P_e.y_j + H_e \quad [20]$$

The said coordinates $x_j$, $y_j$ of the point $P_j$ relate to the abovementioned system of reference axes which is permanently associated with the hovercraft. The value $z_j$ thus obtained can then be interpreted as a water height above the zero plane of the echo-sounding transducer, i.e. the XY reference plane defined earlier.

The root mean square error $E_m$ can be calculated and thus gives information about the quality of the measured and calculated height. This root mean square error $E_m$ is determined as follows:

$$E_m = \sqrt{ \left( \sum_{i=1}^{7} w_i \cdot r_i^2 \right) / \sum_{i=1}^{7} w_i } \quad [21]$$

An examination of the remainders $r_i$ gives information about whether a measurement agrees well, or does not agree well, with "the general trend". It is then possible to give suspect data a lower weighting and to perform the least squares approximation again with the intention of obtaining a more accurate result. This may sometimes be necessary in order to disregard a transducer completely and thus set its weighting at zero. This is called subset selection. This case may arise should one of the transducers be damaged or inactive.

It is also possible to derive weightings for individual transducers from a large number of measurements. As a result, account can be taken of a more or less interference-free environment, with the failure or breakage of the transducer etc., etc., for each transducer separately. Thus, with a particular embodiment it has been found that the two transducers US1 and US2 at the front yield very reliable measurement results because they are less exposed to spray. In this embodiment, the following weightings are then used:

w1 = weighting US1     = 10
w2 = weighting US2     = 10
w3 = weighting US3     = 1,0
w4 = weighting US4     = 1,0
w5 = weighting US5     = 1,0
w6 = weighting roll     = 0,5
w7 = weighting pitch     = 0,5

The algorithm makes it possible to obtain exact results, even in the case of a defective transducer, because of the large redundancy in the measuring system. It is thus also no longer necessary to discontinue a measuring journey because of the failure of one of these transducers. This makes the general reliability and "mean time between failure" greater.

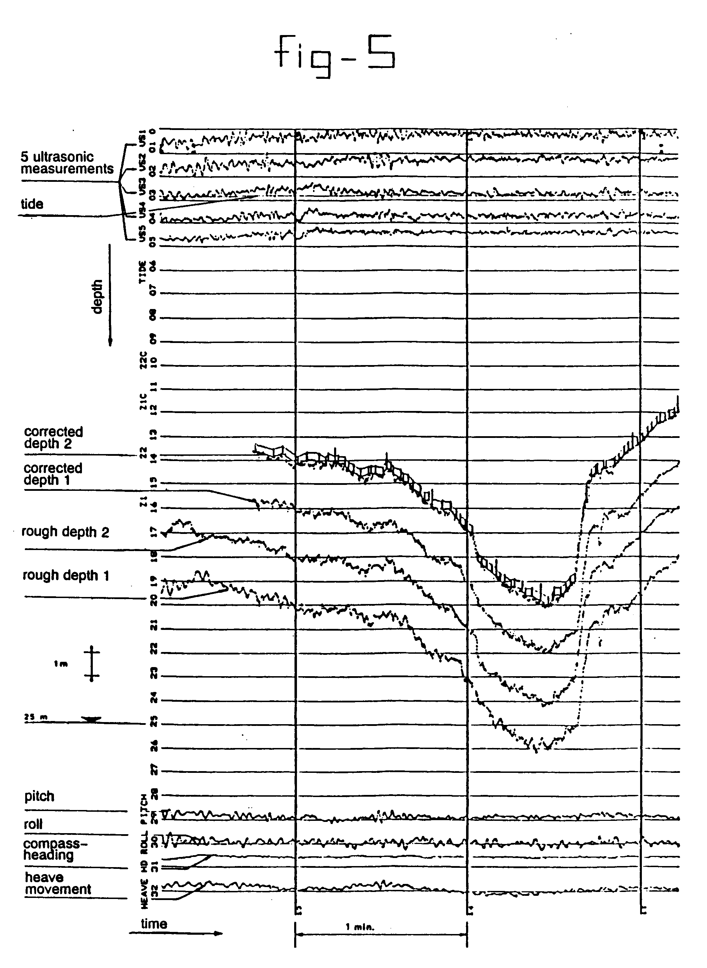

Figure 5 shows, as an example, a plot of the analog signals of the five transducers US1 to US5, of the tide, of the gyroscope, of the compass course and the heave movement, and the so-called rough depth from two depth transducers, with respect to time. The rough depth values 1 and 2 are processed with the aid of the signals from the transducers, the gyroscope and other corrections to produce the indicated corrected depth values 1 and 2.

It is obvious that the embodiments indicated above are only examples. It is clear to the person skilled in the art that modifications and variants are possible within the scope of the invention. Thus, the electronic control and processing unit can be designed on the basis of firmware, but also on the basis of software.

**Claims**

1. Height-measuring system for measuring the instantaneous height of a vessel, above the water surface using a number of height-measuring devices and an electronic control and processing unit, at least one ultrasonic transmit-receive transducer and two other height-related transducers being used as the height-measuring devices, ultrasonic waves being emitted in the direction of the water surface by the at least one ultrasonic transducer and being received by it after reflection thereat, additional height-related information being determined by the other two transducers, and the analog output signals of the transducers being fed to the electronic control and processing unit, in which they are processed to obtain the height of the said water surface, characterised in that the at least three transducers (1,2,3) are mounted above the water surface in a fixed distance relationship with respect to a reference plane extending perpendicularly to the axis of the vessel mast, in that the electronic control and processing unit has an anti-aliasing filter (4), an analog/digital converter (5) and a finite impulse response filter (6) for each analog output signal, in that the water height at an arbitrary position is calculated with the aid of these digital data in the control and processing unit, each transducer having coordinates x and y in the reference plane, and in that for each transducer the height z of the water surface is determined, the mean water surface being reproduced with respect to the said reference surface by $z = R.x + P.y + H$, where the variable z is the height of the water surface at the point determined by the coordinates x, y of said point and the parameters R, P and H are unknown variables.

2. Height-measuring system according to claim 1, characterised in that the other two height-related transducers are also ultrasonic transmit-receive transducers which are mounted with the said at least one ultrasonic transmit-receive transducer above the water surface essentially around the vessel.

3. Height-measuring system according to claim 1, characterised in that the other two height-related transducers are the two converters from a vertical gyroscope, one of which determines the rotation around the longitudinal axis (roll) and the other of which determines the rotation around the transverse axis (pitch) of the vessel during the height measurement.

4. Height-measuring system according to claim 2, characterised in that the electronic control and processing unit is embodied to solve, with respect to the three ultrasonic transmit-receive transducers, a system of at least three linear equations given by:

$$z_1 = R.x_1 + P.y_1 + H$$

$$z_2 = R.x_2 + P.y_2 + H$$

$$z_3 = R.x_3 + P.y_3 + H$$

in which $z_1$ to $z_3$ are the low pass-filtered height measurement values of the transducers, the sets of coordinates $x_1, y_1$ to $x_3, y_3$ are the positions of the transducers in the reference plane, and R, P and H are the said unknown variables.

5. Height-measuring system according to claim 3, characterised in that the electronic control and processing unit is embodied to solve, with respect to the at least one ultrasonic transducer and the two converters from the gyroscope, a set of at least three linear equations given by:

$$z_1 = R.x_1 + P.y_1 + H$$
$$D.\tan(\text{roll}) = R.D.$$
$$D.\tan(\text{pitch}) = P.D$$

in which $z_1$ is the low pass-filtered height measurement value of the transducer, the set of coordinates $x_1, y_1$ is the position of the transducer in the reference plane, and R, P and H are the said unknown variables, and in which the distance D is an imaginary distance which is used as a multiplication factor for the two equations relating to the rotations around the X-axis (pitch) and Y-axis (roll).

6. Height-measuring system according to claims 2 and 3, characterised in that the electronic control and processing unit is embodied to solve, with respect to at least five ultrasonic transmit-receive transducers and to the two converters from the gyroscope, a system of at least seven linear equations given by

$$z_1 = R.x_1 + P.y_1 + H$$
$$z_2 = R.x_2 + P.y_2 + H$$
$$z_3 = R.x_3 + P.y_3 + H$$
$$z_4 = R.x_4 + P.y_4 + H$$
$$z_5 = R.x_5 + P.y_5 + H$$
$$D.\tan(\text{roll}) = R.D$$
$$D.\tan(\text{pitch}) = P.D$$

in which $z_1$ to $z_5$ are the low pass-filtered height measurement values of the transducers, the sets of co-ordinates $x_1$, $y_1$ to $x_5$, $y_5$ are the positions in the reference plane of the transducers, and R, P and H are the said unknown variables, and in which the distance D is an imaginary distance which is used as a multiplication factor for the two equations relating to the rotations around the X-axis (pitch) and Y-axis (roll).

7. Height-measuring system according to claim 4, characterised in that the system of at least three equations is rewritten in the electronic control and processing unit as

$$\begin{bmatrix} x_1 & y_1 & 1 \\ x_2 & y_2 & 1 \\ x_3 & y_3 & 1 \end{bmatrix} \cdot \begin{bmatrix} R \\ P \\ H \end{bmatrix} = \begin{bmatrix} z_1 \\ z_2 \\ z_3 \end{bmatrix}$$

8. Height-measuring system according to claim 5, characterised in that the system of equations is rewritten in the electronic control and processing unit as:

$$\begin{bmatrix} x_1 & y_1 & 1 \\ D & 0 & 1 \\ 0 & D & 1 \end{bmatrix} \cdot \begin{bmatrix} R \\ P \\ H \end{bmatrix} = \begin{bmatrix} z_1 \\ D.\tan(\text{roll}) \\ D.\tan(\text{pitch}) \end{bmatrix}$$

9. Height-measuring system according to claim 6, characterised in that the system of equations is rewritten in the electronic control and processing unit as:

$$\begin{bmatrix} x_1 & y_1 & 1 \\ x_2 & y_2 & 1 \\ x_3 & y_3 & 1 \\ x_4 & y_4 & 1 \\ x_5 & y_5 & 1 \\ D & 0 & 1 \\ 0 & D & 1 \end{bmatrix} \cdot \begin{bmatrix} R \\ P \\ H \end{bmatrix} = \begin{bmatrix} z_1 \\ z_2 \\ z_3 \\ z_4 \\ z_5 \\ D.\tan(\text{roll}) \\ D.\tan(\text{pitch}) \end{bmatrix}$$

10. Height-measuring system according to claim 9, characterised in that the said system of equations is derived in abbreviated form as A.X = B, no exact solution being found but an estimate $X_e$ being found for the matrix X with the aid of the following algebraic operation

$$X_e = (A^t.W.A)^{-1}.A^t.W.B,$$

where $A^t$ is the transposed matrix of A and W is a weighting matrix.

11. Height-measuring system according to claim 10, characterised in that the weighting matrix W has the following form

$$W = \begin{bmatrix} w_1 & 0 & 0 & 0 & 0 & 0 & 0 \\ 0 & w_2 & 0 & 0 & 0 & 0 & 0 \\ 0 & 0 & w_3 & 0 & 0 & 0 & 0 \\ 0 & 0 & 0 & w_4 & 0 & 0 & 0 \\ 0 & 0 & 0 & 0 & w_5 & 0 & 0 \\ 0 & 0 & 0 & 0 & 0 & w_6 & 0 \\ 0 & 0 & 0 & 0 & 0 & 0 & w_7 \end{bmatrix}$$

EP 0 476 787 B1

in which $w_1$ to $w_7$ are the weightings given to the ultrasonic transducers and to the roll and pitch converters.

**Patentansprüche**

1. Höhenmeßvorrichtung zum Messen der momentanen Höhe eines Wasserfahrzeuges über der Wasseroberfläche unter Verwendung einer Anzahl von Höhenmeßgeräten und einer elektronischen Steuer- und Prozessoreinheit, wobei mindestens ein Ultraschall-Sende-Empfangs-Wandler und zwei weitere höhenbezogene Wandler als die Höhenmeßgeräte benutzt werden, Ultraschallwellen in Richtung der Wasseroberfläche mittels des mindestens einen Ultraschallwandlers emittiert und nach Reflexion an der Wasseroberfläche von diesem empfangen werden, zusätzliche höhenbezogene Informationen mittels der beiden weiteren Wandler bestimmt werden und die analogen Ausgangssignale der Wandler der elektronischen Steuer- und Prozessoreinheit zugeführt werden, in welcher sie verarbeitet werden, um die Höhe der Wasseroberfläche zu erhalten, dadurch gekennzeichnet, daß die mindestens drei Wandler (1, 2, 3) über der Wasseroberfläche in einem festen Abstand mit Bezug auf eine Bezugsebene montiert sind, die senkrecht zu der Achse des Mastes des Wasserfahrzeugs verläuft, daß die elektronische Steuer- und Prozessoreinheit ein Anti-Aliasing-Filter (4), einen Analog/Digital-Wandler (5) und ein Filter (6) mit endlicher Impulsantwort für jedes analoge Ausgangssignal aufweist, daß die Wasserhöhe an einer willkürlichen Position mit Hilfe dieser Digitaldaten in der Steuer- und Prozessoreinheit berechnet wird, wobei jeder Wandler Koordinaten x und y in der Bezugsebene hat, und daß für jeden Wandler die Höhe z der Wasseroberfläche bestimmt wird, wobei die mittlere Wasseroberfläche mit Bezug auf die Bezugsebene durch $z = R \cdot x + P \cdot y + H$ reproduziert wird, wobei die Variable z die Höhe der Wasseroberfläche an dem Punkt ist, der durch die Koordinaten x, y dieses Punktes bestimmt ist, und die Parameter R, P und H unbekannte Variablen sind.

2. Höhenmeßvorrichtung nach Anspruch 1, dadurch gekennzeichnet, daß die beiden weiteren höhenbezogenen Wandler gleichfalls Ultraschall-Sende-Empfangs-Wandler sind, die mit dem mindestens einen Ultraschall-Sende-Empfangs-Wandler über der Wasseroberfläche im wesentlichen um das Wasserfahrzeug herum montiert sind.

3. Höhenmeßvorrichtung nach Anspruch 1, dadurch gekennzeichnet, daß die beiden weiteren höhenbezogenen Wandler die beiden Konverter von einem Vertikal-Gyroskop sind, von denen der eine die Drehung um die Längsachse (Rollen) und der andere die Drehung um die Querachse (Nicken) des Wasserfahrzeuges während der Höhenmessung bestimmt.

4. Höhenmeßvorrichtung nach Anspruch 2, dadurch gekennzeichnet, daß die elektronische Steuer- und Prozessoreinheit so ausgebildet ist, daß sie mit Bezug auf die drei Ultraschall-Sende-Empfangs-Wandler ein System von mindestens drei linearen Gleichungen löst, die gegeben sind durch:
$$z_1 = R \cdot x_1 + P \cdot y_1 + H$$
$$z_2 = R \cdot x_2 + P \cdot y_2 + H$$
$$z_3 = R \cdot x_3 + P \cdot y_3 + H$$
wobei $z_1$ bis $z_3$ die tiefpaßgefilterten Höhenmeßwerte der Wandler sind, die Koordinatengruppen $x_1$, $y_1$ bis $x_3$, $y_3$ die Positionen der Wandler in der Bezugsebene sind und R, P und H die unbekannten Variablen sind.

5. Höhenmeßvorrichtung nach Anspruch 3, dadurch gekennzeichnet, daß die elektronische Steuer- und Prozessoreinheit so ausgebildet ist, daß sie mit Bezug auf den mindestens einen Ultraschallwandler und die beiden Konverter des Gyroskops eine Gruppe von mindestens drei linearen Gleichungen löst, die gegeben sind durch:
$$z_1 = R \cdot x_1 + P \cdot y_1 + H$$
$$D \cdot \tan(Roll) = R \cdot D$$
$$D \cdot \tan(Nick) = \qquad P \cdot D$$
wobei $z_1$ der tiefpaßgefilterte Höhenmeßwert des Wandlers ist, die Koordinatengruppe $x_1$, $y_1$ die Position des Wandlers in der Bezugsebene ist und R, P und H die unbekannten Variablen sind, und wobei der Abstand D ein imaginärer Abstand ist, der als ein Multiplikationsfaktor für die beiden Gleichungen benutzt wird, welche die Drehungen um die X-Achse (Nicken) und die Y-Achse (Rollen) betreffen.

6. Höhenmeßvorrichtung nach Ansprüchen 2 und 3, dadurch gekennzeichnet, daß die elektronische Steuer- und Prozessoreinheit so ausgebildet ist, daß sie mit Bezug auf mindestens fünf Ultraschall-Sende-Empfangs-Wandler und die beiden Konverter des Gyroskops ein System von mindestens sieben linearen Gleichungen löst, die gegeben sind durch:

$$z_1 = R \cdot x_1 + P \cdot y_1 + H$$
$$z_2 = R \cdot x_2 + P \cdot y_2 + H$$
$$z_3 = R \cdot x_3 + P \cdot y_3 + H$$
$$z_4 = R \cdot x_4 + P \cdot y_4 + H$$
$$z_5 = R \cdot x_5 + P \cdot y_5 + H$$
$$D \cdot \tan(\text{Roll}) = R \cdot D$$
$$D \cdot \tan(\text{Nick}) = P \cdot D$$

wobei $z_1$ bis $z_5$ die tiefpaßgefilterten Höhenmeßwerte der Wandler sind, die Koordinatengruppen $x_1$, $y_1$ bis $x_5$, $y_5$ die Positionen der Wandler in der Bezugsebene sind und R, P und H die unbekannten Variablen sind, und wobei der Abstand D ein imaginärer Abstand ist, der als ein Multiplikationsfaktor für die beiden Gleichungen benutzt wird, welche die Drehungen um die X-Achse (Nicken) und die Y-Achse (Rollen) betreffen.

7. Höhenmeßvorrichtung nach Anspruch 4, dadurch gekennzeichnet, daß das System von mindestens drei Gleichungen in der elektronischen Steuer- und Prozessoreinheit umgeschrieben wird als

$$\begin{bmatrix} x_1 & y_1 & 1 \\ x_2 & y_2 & 1 \\ x_3 & y_3 & 1 \end{bmatrix} \cdot \begin{bmatrix} R \\ P \\ H \end{bmatrix} = \begin{bmatrix} z_1 \\ z_2 \\ z_3 \end{bmatrix}$$

8. Höhenmeßvorrichtung nach Anspruch 5, dadurch gekennzeichnet, daß das Gleichungssystem in der elektronischen Steuer- und Prozessoreinheit umgeschrieben wird als:

$$\begin{bmatrix} x_1 & y_1 & 1 \\ D & O & 1 \\ O & D & 1 \end{bmatrix} \cdot \begin{bmatrix} R \\ P \\ H \end{bmatrix} = \begin{bmatrix} z_1 \\ D \cdot \tan(\text{Roll}) \\ D \cdot \tan(\text{Nick}) \end{bmatrix}$$

9. Höhenmeßvorrichtung nach Anspruch 6, dadurch gekennzeichnet, daß das Gleichungssystem in der elektronischen Steuer- und Prozessoreinheit umgeschrieben wird als:

$$\begin{bmatrix} x_1 & y_1 & 1 \\ x_2 & y_2 & 1 \\ x_3 & y_3 & 1 \\ x_4 & y_4 & 1 \\ x_5 & y_5 & 1 \\ D & O & 1 \\ O & D & 1 \end{bmatrix} \cdot \begin{bmatrix} R \\ P \\ H \end{bmatrix} = \begin{bmatrix} z_1 \\ z_2 \\ z_3 \\ z_4 \\ z_5 \\ D \cdot \tan(\text{Roll}) \\ D \cdot \tan(\text{Nick}) \end{bmatrix}$$

**10.** Höhenmeßvorrichtung nach Anspruch 9, dadurch gekennzeichnet, daß das Gleichungssystem in abgekürzter Form als A · X = B abgeleitet wird, wobei keine exakte Lösung gefunden wird, aber ein Schätzwert $X_e$ für die Matrix X mit Hilfe der folgenden algebraischen Operation

$$X_e = (A^t \cdot W \cdot A)^{-1} \cdot A^t \cdot W \cdot B$$

gefunden wird, wobei $A^t$ die transponierte Matrix von A ist und W eine Bewertungsmatrix ist.

**11.** Höhenmeßvorrichtung nach Anspruch 10, dadurch gekennzeichnet, daß die Bewertungsmatrix W die folgende Form hat

$$W = \begin{bmatrix} w_1 & 0 & 0 & 0 & 0 & 0 & 0 \\ 0 & w_2 & 0 & 0 & 0 & 0 & 0 \\ 0 & 0 & w_3 & 0 & 0 & 0 & 0 \\ 0 & 0 & 0 & w_4 & 0 & 0 & 0 \\ 0 & 0 & 0 & 0 & w_5 & 0 & 0 \\ 0 & 0 & 0 & 0 & 0 & w_6 & 0 \\ 0 & 0 & 0 & 0 & 0 & 0 & w_7 \end{bmatrix}$$

wobei $w_1$ bis $w_7$ die den Ultraschallwandlern und den Roll- und Nick-Konvertern gegebenen Bewertungen sind.

## Revendications

**1.** Système de mesure de hauteur pour mesurer la hauteur instantanée d'un navire au-dessus de la surface de l'eau en utilisant un certain nombre de dispositifs de mesure de hauteur et une unité de contrôle et de traitement, dans lequel au moins un transducteur émetteur-récepteur ultrasonore et deux autres transducteurs relatif à la hauteur sont utilisés en tant que les dispositifs de mesure de hauteur, des ondes ultrasonores sont émises en direction de la surface de l'eau par ledit au moins un transducteur ultrasonore et sont reçues par lui après réflection sur celle-là, une information additionnelle relative à la hauteur est déterminée par les autres deux transducteurs, et les signaux de sortie analogiques des transducteurs sont conduits à l'unité électronique de contrôle et de traitement, dans laquelle ils sont traités pour obtenir la hauteur de ladite surface d'eau, caractérisé en ce que lesdits au moins trois transducteurs (1, 2, 3) sont montés au-dessus de la surface de l'eau dans une disposition de distance fixe par rapport à un plan de référence s'étendant perpendiculairement à l'axe du mât du navire, en ce que l'unité électronique de contrôle et de traitement possède un filtre anti-repliement (4), un convertisseur analogique/numérique (5) et un filtre à réponse impulsionnelle finie (6) pour chaque signal analogique de sortie, en ce que la hauteur d'eau dans une position arbitraire est calculée à l'aide de ces données numériques dans l'unité de contrôle et de traitement, chaque transducteur ayant des coordonnées x et y dans le plan de référence, et en ce que pour chaque transducteur la hauteur z de la surface d'eau est déterminée, la surface d'eau moyenne étant reproduite par rapport à ladite surface de référence par z = R. x + P. y + H, où la variable z est la hauteur de la surface d'eau au point déterminé par les coordonnées x, y dudit point et les paramètres R, P et H sont des variables inconnues.

**2.** Système de mesure de hauteur selon la revendication 1, caractérisé en ce que les deux autres transducteurs relatifs à la hauteur sont aussi des transducteurs émetteurs-récepteurs ultrasonores qui sont montés avec ledit au moins un transducteur ultrasonore émetteur-récepteur au-dessus de la surface de l'eau sensiblement autour du navire.

3. Système de mesure de hauteur selon la revendication 1, caractérisé en ce que les deux autres transducteurs relatifs à la hauteur sont les deux convertisseurs d'un gyroscope vertical, dont l'un détermine la rotation autour de l'axe longitudinal (roulis) et l'autre détermine la rotation autour de l'axe transversal (tangage) du navire pendant la mesure de hauteur.

4. Système de mesure de hauteur selon la revendication 2, caractérisé en ce que l'unité électronique de contrôle et de traitement est agencée pour résoudre, en relation avec les trois transducteurs émetteurs-récepteurs ultrasonores, un système d'au moins trois équations linéaires données par :

$$z_1 = R.x_1 + P.y_1 + H$$
$$z_2 = R.x_2 + P.y_2 + H$$
$$z_3 = R.x_3 + P.y_3 + H$$

où $z_1$ à $z_3$ sont les valeurs de mesure de hauteur filtrées passe-bas des transducteurs, les jeux de coordonnées $x_1$, $y_1$ à $x_3$, $y_3$ sont les positions des transducteurs dans le plan de référence et R, P et H sont lesdites variables inconnues.

5. Système de mesure de hauteur selon la revendication 3, caractérisé en ce que l'unité électronique de contrôle et de traitement est agencée pour résoudre, en relation avec ledit au moins un transducteur ultrasonore et les deux convertisseurs du gyroscope, un ensemble d'au moins trois équations linéaires données par :

$$z_1 = R.x_1 + P.y_1 + H$$
$$D.\tan(\text{roulis}) = R.D.$$
$$D.\tan(\text{tangage}) = P.D.$$

où $z_1$ est la valeur de mesure de hauteur filtrée passe-bas du transducteur, le jeu de coordonnées $x_1$, $y_1$ est la position du transducteur dans le plan de référence et R, P, H sont lesdites variables inconnues, et où la distance D est une distance imaginaire qui est utilisée comme facteur multiplicateur pour les deux équations relatives aux rotations autour de l'axe X (tangage) et de l'axe Y (roulis).

6. Système de mesure de hauteur selon les revendications 2 et 3, caractérisé en ce que l'unité électronique de contrôle et de traitement est agencée pour résoudre, en relation avec au moins cinq transducteurs émetteurs-récepteurs ultrasonores et les deux convertisseurs du gyroscope, un système d'au moins sept équations linéaires données par

$$z_1 = R.x_1 + P.y_1 + H$$
$$z_2 = R.x_2 + P.y_2 + H$$
$$z_3 = R.x_3 + P.y_3 + H$$
$$z_4 = R.x_4 + P.y_4 + H$$
$$z_5 = R.x_5 + P.y_5 + H$$
$$D.\tan(\text{roulis}) = R.D.$$
$$D.\tan(\text{tangage}) = P.D.$$

où $z_1$ à $z_5$ sont les valeurs de mesure de hauteur filtrées passe-bas des transducteurs, les jeux de coordonnées $x_1$, $y_1$ à $x_5$, $y_5$ sont les positions des transducteurs dans le plan de référence, et R, P et H sont lesdites variables inconnues, et où la distance D est une distance imaginaire qui est utilisée comme facteur multiplicateur pour les deux équations relatives aux rotations autour de l'axe X (tangage) et Y (roulis).

7. Système de mesure de hauteur selon la revendication 4, caractérisé en ce que le système d'au moins trois équations est réécrit dans l'unité électronique de contrôle et de traitement sous forme

$$
\begin{bmatrix} x_1 & y_1 & 1 \\ x_2 & y_2 & 1 \\ x_3 & y_3 & 1 \end{bmatrix}
\cdot
\begin{bmatrix} R \\ P \\ H \end{bmatrix}
=
\begin{bmatrix} z_1 \\ z_2 \\ z_3 \end{bmatrix}
$$

8. Système de mesure de hauteur selon la revendication 5, caractérisé en ce que le système d'équations est réécrit dans l'unité électronique de contrôle et de traitement sous la forme :

$$\begin{bmatrix} x_1 & y_1 & 1 \\ D & O & 1 \\ O & D & 1 \end{bmatrix} \cdot \begin{bmatrix} R \\ P \\ H \end{bmatrix} = \begin{bmatrix} z_1 \\ D.tan(roulis) \\ D.tan(tangage) \end{bmatrix}$$

9. Système de mesure de hauteur selon la revendication 6, caractérisé en ce que le système d'équation est réécrit dans l'unité électronique de contrôle et de traitement sous forme :

$$\begin{bmatrix} x_1 & y_1 & 1 \\ x_2 & y_2 & 1 \\ x_3 & y_3 & 1 \\ x_4 & y_4 & 1 \\ x_5 & y_5 & 1 \\ D & O & 1 \\ O & D & 1 \end{bmatrix} \cdot \begin{bmatrix} R \\ P \\ H \end{bmatrix} = \begin{bmatrix} z_1 \\ z_2 \\ z_3 \\ z_4 \\ z_5 \\ D.tan(roulis) \\ D.tan(tangage) \end{bmatrix}$$

10. Système de mesure de hauteur selon la revendication 9, caractérisé en ce que ledit système d'équations est dérivé sous forme abrégée en tant que A.X = B, aucune solution exacte n'étant trouvée mais une valeur estimée $X_e$ étant trouvée pour la matrice X avec l'aide de l'opération algébrique suivante
$$X_e = (A^t.W.A)^{-1}.A^t.W.B,$$
où $A^t$ est la matrice transposée de A et W est une matrice de pondération.

11. Système de mesure de hauteur selon la revendication 10, caractérisé en ce que la matrice de pondération W a la forme suivante

$$W = \begin{bmatrix} w_1 & 0 & 0 & 0 & 0 & 0 & 0 \\ 0 & w_2 & 0 & 0 & 0 & 0 & 0 \\ 0 & 0 & w_3 & 0 & 0 & 0 & 0 \\ 0 & 0 & 0 & w_4 & 0 & 0 & 0 \\ 0 & 0 & 0 & 0 & w_5 & 0 & 0 \\ 0 & 0 & 0 & 0 & 0 & w_6 & 0 \\ 0 & 0 & 0 & 0 & 0 & 0 & w_7 \end{bmatrix}$$

dans laquelle $w_1$ à $w_7$ sont les pondérations données aux transducteurs ultrasonores et aux convertisseurs de roulis et de tangage.

fig-1

fig-2

fig-3a

fig-4

fig - 3b

# fig-5